# EUROPEAN PATENT SPECIFICATION

(11) **EP 1 708 448 B1**
(45) Date of publication and mention of the grant of the patent: **23.07.2008**
(21) Application number: 05252029.3
(22) Date of filing: 31.03.2005
(51) Int. Cl.: H04L 29/06

(54) **Privacy protection for mobile internet protocol sessions**
Schutz der Privatsphäre bei mobilen IP-Sitzungen
Protection de la confidentialité dans les sessions de protocole internet mobile

(43) Date of publication of application: 04.10.2006
(60) Divisional application: 08154243.3
(73) Proprietor: MATSUSHITA ELECTRIC INDUSTRIAL CO., LTD., Kadoma-shi, Osaka 571-8501 (JP)
(72) Inventor: Antoine, Stephane, Reading, Berkshire RG4 7SY (GB); Kasapidis, Makis, Markinch, Fife KY7 6DS (GB)
(74) Representative: Haley, Stephen

(56) References cited:
- EP-A- 1 432 198
- WO-A-03/030488
- US-A1- 2004 148 364
- NARTEN T ET AL: "RFC 3041: Privacy Extensions for Stateless Address Autonconfiguration in IPv6" IETF REQUEST FOR COMMENTS, 1 January 2001 (2001-01-01), pages 1-17, XP002181525

## Description

The present invention relates to mobile communications, and particularly to mobile internet communications.

In such communications privacy is a general term to designate the claim of individuals to determine for themselves when, how, and to what extent information about themselves is communicated to others. Such privacy is usually considered to encompasse several properties, which are *Anonymity, Pseudonimity, unlinkabilty* and *location privacy*.

Anonymimity ensures that a user may use a resource or service without disclosing it.

Pseudonimity ensures that a user may use a resource or service without disclosing its user identity, but still can be accountable for that use.

Unlinkability ensures that a user may make use of resources or services without others being able to link these two uses together.

Location privacy means the capability of a mobile node to conceal the relationship between its location and any personal identifiable information from third parties.

In the latest protocols, such as IPv6, addresses generated using stateless address auto-configuration contain an embedded 64-bit interface identifier, which remains constant over time. This can be a problem for privacy as anytime a fixed identifier is used in multiple contexts, it becomes possible to correlate seemingly unrelated activity using this identifier. Attackers who are present in the path between the communicating peers can view the constant address present in the datagrams and perform this correlation. To solve this problem and provide unlinkability, a privacy extension for IPv6 has been proposed. Such privacy extension for stateless address auto-configuration allows IPv6 addresses to have their interface ID change randomly at periodic intervals of time. A temporary address whose interface ID changes periodically makes it more difficult for indiscrete information collectors in the internet domain to correlate when different transactions actually correspond to the same node/user.

Mobile Ipv6 utilizes a node with an address that does not change as the home agent. Whenever the mobile node moves to a new subnet and acquires a new IP address, called a care of address (CoA), it notifies the home agent of the new address. Packets addressed to the unchanged home agent are tunnelled by the home agent to the latest CoA being used by the mobile node. The notification of the home agent is called a binding update. The binding update contains a Constant Home Address (HoA), to which the mobile node is always addressable. A Binding Acknowledgement (BACK) is sent in response to the binding update and contains the same HoA in its routing header.

As IPsec protects the binding update and the BACK between the mobile node and its home access, a constant Security Parameter Index (SPI) identifying each one-way security association is apparent in the binding update and the BACK.

Accordingly, the latest protocols sessions, such as Mobile IPv6 sessions do not benefit from the address change offered by privacy extension in other protocols because the constant home address present in its Mobility option, together with the security parameter index, allows correlation of sessions even when the Care of Address (CoA) changes.

According to the present invention there is provided a method of establishing communication protocols between a mobile node and a home agent in a mobile communications network, the method comprising the steps of:
generating, at the mobile node plural care of addresses (CoAs) and a corresponding number of security parameter indices;
sending the generated CoAs and security parameter indices to the home agent in an encypted form;
generating, at the home agent, on the basis of the received CoAs and security parameter indices, an equal number of home addresses (HoAs) and associated security parameter indices;
sending the list of HoAs and associated security parameter indices generated at the home agent to the mobile node, and;
using the generated CoAs and HoAs in pairs along with the associated security parameter indices as the basis for communication protocol addresses and encryption for communication between the home agent and the mobile node,
wherein a new CoA-HoA pair and corresponding security parameter index are used for every new communication session between the mobile node and the home agent.

The present invention also provides a system arranged to employ the above method and a mobile node used in the system.

The present invention addresses the problem of linkability in relation to protocols such as Mobile IPv6. Currently a third party that can intercept packets between the mobile node and the home agent can correlate the various sessions of a given user.

In the present invention, a mobile node and its home access point agree beforehand on the use of a number of sets of CoA, HoA, and Security Parameter Indices which are used for every new session. Each IP address should be unique and a check for such uniqueness can only be run at the local link where the address will be used. Also, although the Security Parameter Index is written in a packet by the sending node it must be unique for all the sessions at the receiving node so Security Parameter Indices must be generated by the receiving node and communicated to the sending node.

One example of the present invention will now be described with reference to the accompanying drawing, in which figure one is a schematic diagram showing a system according to the present invention.

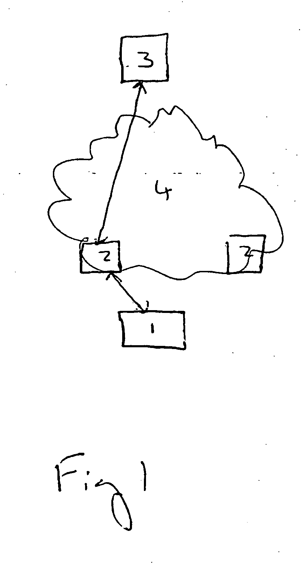

Referring to figure 1, a system according to the present invention comprises a mobile node 1 which can connect, dependent upon its location, with one of a number of local subnets 2 to communicate with a home agent 3 via a network 4 such as the Internet. The mobile node 1 may be any one of a number of mobile communication devices, such as a portable or handheld computer or mobile telephone.

The invention employs a method which comprises the following steps. Firstly, the mobile node 1 generates a number of care of addresses (CoAs) upon arrival at the new subnet 2. For each address selected, duplicate address detection is performed on the subnet network. The mobile node 1 also generates an equal number of Security Parameter Indices.

The list of CoAs and corresponding Security Parameter Indices is sent to the home agent 3 encrypted as an option in the binding update message that must be sent every time the mobile node 1 moves to a new subnet 2.

The home agent 3 upon receipt of the binding update, generates a number of HoAs and performs duplicate address detection for each one of them. The home agent 3 also generates an equal number of Security Parameter Indices.

The list of HoAs and Security Parameter Indices is sent to the mobile node 1 encrypted in the BACK message as options.

The security selectors at the mobile node 1 and the home agent 3 are then updated so that packets corresponding to all pairs (CoA-HoA) for a given mobile node 1 use the same security association and communication can commence.

Then, when the mobile node 1 initiates a new session, it uses the next unused pair of CoA-HoA addresses and corresponding Security Parameter Index. Each pair of (CoA-HoA) is only used once per transaction.

Similarly, for a new session initiated by a correspondent node that uses the home agent 3 to contact the mobile node 1, the home agent 3 will use a new set of CoA-HoA to tunnel the packets to the mobile node 1.

With the above method the home agent 3 can be configured also to be monitoring for the next pair of CoA-HoA on its connections so that any change can be effected without undue delay.

As will be appreciated from the above, the present invention enables the provision, even with mobile protocols, of unlinkable privacy communication without the need for high levels of data communication between the mobile node 1 and home agent 3.

## Claims

1. A method of establishing communication protocols between a mobile node (1) and a home agent (3) in a mobile communications network (4), the method comprising the steps of:
generating, at the mobile node plural care of addresses, CoAs, and a corresponding number of security parameter indices;
sending the generated CoAs and security parameter indices to the home agent in an encypted form;
generating, at the home agent, on the basis of the received CoAs and security parameter indices, an equal number of home addresses, HoAs, and associated security parameter indices;
sending the list of HoAs and associated security parameter indices generated at the home agent to the mobile node, and;
using the generated CoAs and HoAs in pairs along with the associated security parameter indices as the basis for communication protocol addresses and encryption for communication between the home agent and the mobile node,
wherein a new CoA-HoA pair and corresponding security parameter index are used for every new communication session between the mobile node and the home agent.

2. A method according to claim 1, wherein the step of sending the generated CoAs and security parameter indices to the home agent (3) is carried out as part of a binding update message as the mobile node begins communication via a new subnet node (2).

3. A method according to claim 2, wherein the HoAs and security parameter indices generated at the home agent (3) are sent to the mobile node (1) as part of a binding acknowledgment, BACK, signal.

4. A method according to claim 1, wherein the CoA addresses are checked for their uniqueness with the duplicate address detection procedure.

5. A method according to any preceding claim, further comprising the step of monitoring, at the home agent (3), for the next HoA-CoA pair.

6. A method according to any preceding claim, wherein the method conforms to the Mobile IPv6 protocol.

7. A computer program product comprising instructions to operate a computer system to perform the method of any preceding claim.

8. A mobile communication system comprising a mobile node (1), a home agent (3) and at least one subnet node (2) for connecting therebetween via a network (4),
the mobile node comprising: means for generating plural CoAs and a corresponding number of security parameter indices; and means for sending the generated CoAs and security parameter indices to the home agent; and
the home agent comprising: means for generating, on the basis of the received CoAs and security parameter indices, a corresponding number of HoAs and associated security parameter indices; and means for sending the HoAs and associated security parameters indices to the mobile node;
wherein the mobile node and home agent are arranged to communicate on the basis of protocols employing the generated CoAs and HoAs in pairs along with the associated security parameter indices, and
wherein a new CoA - HoA pair and corresponding security parameter index are used for every new communication session between the mobile node and the home agent.

9. A mobile node (1) that is used in a mobile communication system having a home agent (3) and at least one subnet node (2) for connecting therebetween via a network (4), the mobile node comprising:
means for generating plural care of addresses, CoAs, and a corresponding number of security parameter indices;
means for sending the generated CoAs and security parameter indices to the home agent;
means for receiving a corresponding number of home addresses, HoAs, and associated security parameter indices, which are generated by and sent from the home agent on the basis of the received CoAs and security parameter indices; and
means for choosing a CoA and a paired HoA along with an associated security parameter index;
wherein the mobile node is arranged to communicate with the home agent on the basis of protocols employing the generated CoAs, HoAs and associated security parameter indices; and
the mobile node uses the next unused pair of CoA-HoA addresses and corresponding security parameter index for each new communication session between the mobile node and the home agent.

## Patentansprüche

1. Verfahren zum Einrichten von Kommunikationsprotokollen zwischen einem Mobilknoten (1) und einem Home-Agent (3) in einem mobilen Kommunikationsnetz (4), mit den Schritten:
Erzeugen mehrerer Care-of-Adressen, CoAs, und einer entsprechenden Anzahl von Sicherheitsparameterindizes auf Seiten des Mobilknotens,
Senden der erzeugten CoAs und Sicherheitsparameterindizes an den Home-Agent in einer verschlüsselten Form,
Erzeugen einer gleichen Anzahl von Home-Adressen, HoAs, und zugewiesener Sicherheitsparameterindizes auf Seiten des Home-Agents auf Basis der empfangenen CoAs und Sicherheitsparameterindizes,
Senden der Liste von HoAs und zugewiesener Sicherheitsparameterindizes, die auf Seiten des Home-Agents erzeugt wurden, an den Mobilknoten, und
Verwenden der erzeugten CoAs und HoAs in Paaren zusammen mit den zugewiesenen Sicherheitsparameterindizes als Basis für Kommunikationsprotokolladressen und Verschlüsselung einer Kommunikation zwischen dem Home-Agent und dem Mobilknoten,
wobei ein neues CoA-HoA-Paar und ein entsprechender Sicherheitsparameterindex für jede neue Kommunikationssitzung zwischen dem Mobilknoten und dem Home-Agent verwendet werden.

2. Verfahren nach Anspruch 1,
wobei der Schritt des Sendens der erzeugten CoAs und Sicherheitsparameterindizes an den Home-Agent (3) als Teil einer Bindungsaktualisierungsnachricht ausgeführt wird, wenn der Mobilknoten eine Kommunikation über einen neuen Subnetz-Knoten (2) beginnt.

3. Verfahren nach Anspruch 2,
wobei die HoAs und Sicherheitsparameterindizes, die auf Seiten des Home-Agents (3) erzeugt werden, an den Mobilknoten (1) als Teil eines Bindungsbestätigungssignals, BACK, gesendet werden.

4. Verfahren nach Anspruch 1,
wobei die CoA-Adressen auf ihre Einmaligkeit mit der Doppeladresserfassungsprozedur geprüft werden.

5. Verfahren nach einem der vorstehenden Ansprüche,
ferner mit dem Schritt des Überwachens nach dem nächsten HoA-CoA-Paar auf Seiten des Home-Agents (3).

6. Verfahren nach einem der vorstehenden Ansprüche,
wobei das Verfahren dem Mobile-IPv6-Protokoll genügt.

7. Computerprogrammprodukt mit Instruktionen zum Betreiben eines Computersystems zum Durchführen des Verfahrens nach einem der vorstehenden Ansprüche.

8. Mobilkommunikationssystem mit einem Mobilknoten (1), einem Home-Agent (3) und wenigstens einem Subnetz-Knoten (2) zum Verbinden dazwischen über ein Netz (4),
wobei der Mobilknoten umfasst: Mittel zum Erzeugen mehrerer CoAs und einer entsprechenden Anzahl an Sicherheitsparameterindizes und Mittel zum Senden der erzeugten CoAs und Sicherheitsparameterindizes an den Home-Agent, und
wobei der Home-Agent umfasst: Mittel zum Erzeugen einer entsprechenden Anzahl von HoAs und zugewiesener Sicherheitsparameterindizes auf Basis der empfangenen CoAs und Sicherheitsparameterindizes und Mittel zum Senden der HoAs und der zugewiesenen Sicherheitsparameterindizes an den Mobilknoten,
wobei der Mobilknoten und der Home-Agent ausgestaltet sind, auf Basis von Protokollen zu kommunizieren, die die erzeugten CoAs und HoAs in Paaren zusammen mit den zugewiesenen Sicherheitsparameterindizes verwenden, und
wobei ein neues CoA-HoA-Paar und ein entsprechender Sicherheitsparameterindex für jede neue Kommunikationssitzung zwischen dem Mobilknoten und dem Home-Agent verwendet werden.

9. Mobilknoten (1), der in einem Mobilkommunikationssystem mit einem Home-Agent (3) und wenigstens einem Subnetz-Knoten (2) zum Verbinden dazwischen über ein Netz (4) verwendet wird, wobei der Mobilknoten umfasst:
Mittel zum Erzeugen mehrerer Care-of-Adressen, CoAs und einer entsprechenden Anzahl von Sicherheitsparameterindizes,
Mittel zum Senden der erzeugten CoAs und Sicherheitsparameterindizes an den Home-Agent,
Mittel zum Empfangen einer entsprechenden Anzahl von Home-Adressen, HoAs, und zugewiesener Sicherheitsparameterindizes, die durch den Home-Agent auf Basis der empfangenen CoAs und Sicherheitsparameterindizes erzeugt und von diesem versendet wurden, und Mittel zum Auswählen einer CoA und einer gepaarten HoA zusammen mit einem zugewiesenen Sicherheitsparameterindex,
wobei der Mobilknoten ausgebildet ist, mit dem Home-Agent auf Basis von Protokollen zu kommunizieren, die die erzeugten CoAs, HoAs und zugewiesenen Sicherheitsparameterindizes verwenden, und
der Mobilknoten das nächste unbenutzte Paar von CoA-HoA-Adressen und den entsprechenden Sicherheitsparameterindex für eine neue Kommunikationssitzung zwischen dem Mobilknoten und dem Home-Agent verwendet.

## Revendications

1. Procédé permettant d'établir des protocoles de communication entre un noeud mobile (1) et un agent domestique (3) dans un réseau de communication mobile (4), le procédé comprenant les étapes consistant à :
générer - au niveau du noeud mobile - une pluralité d'adresses temporaires - ou adresses « Care-of », adresses CoA, ainsi qu'un nombre correspondant d'indices de paramètres de sécurité ;
envoyer les adresses CoA et les indices de paramètres de sécurité générés, à l'agent domestique sous une forme chiffrée ;
générer - au niveau de l'agent domestique - sur la base des adresses CoA et des indices de paramètres de sécurité reçus, un nombre égal d'adresses domestiques , adresses HoA, et d'indices de paramètres de sécurité associés ;
envoyer la liste des adresses HoA et des indices de paramètres de sécurité associés générés au niveau de l'agent domestique, vers le noeud mobile, et ;
utiliser les adresses CoA et les adresses HoA générées par paires en même temps que les indices de paramètres de sécurité associés en tant que base pour des adresses de protocole de communication et un chiffrement pour une communication entre l'agent domestique et le noeud mobile,
dans lequel une nouvelle paire d'adresses CoA / HoA et un nouvel indice de paramètres de sécurité correspondant sont utilisés pour chaque nouvelle session de communication entre le noeud mobile et l'agent domestique.

2. Procédé selon la revendication 1, dans lequel l'étape d'envoi des adresses CoA et des indices de paramètres de sécurité générés vers l'agent domestique (3) est accomplie en tant qu'une partie d'un message de mise à jour de liaison lorsque le noeud mobile débute une communication par l'intermédiaire d'un nouveau noeud de sous-réseau (2).

3. Procédé selon la revendication 2, dans lequel les adresses HoA et les indices de paramètres de sécurité générés au niveau de l'agent domestique (3) sont envoyés vers le noeud mobile (1) en tant qu'une partie d'un signal d'accusé de réception de liaison, BACK.

4. Procédé selon la revendication 1, dans lequel les adresses CoA sont vérifiées afin de s'assurer de leur unicité en réalisant la procédure de détection d'adresses en double.

5. Procédé selon l'une quelconque des revendications précédentes, comprenant par ailleurs l'étape consistant à surveiller - au niveau de l'agent domestique (3) - la nouvelle paire HoA / CoA.

6. Procédé selon l'une quelconque des revendications précédentes, dans lequel le procédé est conforme au protocole IPv6 pour communications mobiles.

7. Produit programme d'ordinateur comprenant des instructions qui commandent à un système informatique de mettre en oeuvre le procédé selon l'une quelconque des revendications précédentes.

8. Système de communication mobile comprenant un noeud mobile (1), un agent domestique (3) et au moins un noeud de sous-réseau (2), pour une connexion entre eux par l'intermédiaire d'un réseau (4),
le noeud mobile comprenant : des moyens pour générer une pluralité d'adresses CoA, ainsi qu'un nombre correspondant d'indices de paramètres de sécurité ; et des moyens pour envoyer les adresses CoA et les indices de paramètres de sécurité générés, à l'agent domestique ; et
l'agent domestique comprenant : des moyens pour générer, sur la base des adresses CoA et des indices de paramètres de sécurité reçus, un nombre correspondant d'adresses HoA et d'indices de paramètres de sécurité associés ; et des moyens pour envoyer les adresses HoA et les indices de paramètres de sécurité associés, à l'agent domestique,
dans lequel le noeud mobile et l'agent domestique sont agencés pour communiquer sur la base de protocoles qui emploient les adresses CoA et les adresses HoA générées par paires en même temps que les indices de.paramètres de sécurité associés, et
dans lequel une nouvelle paire d'adresses CoA / HoA et un nouvel indice de paramètres de sécurité correspondant sont utilisés pour chaque nouvelle session de communication entre le noeud mobile et l'agent domestique.

9. Noeud mobile (1), qui est utilisé dans un système de communication mobile comprenant un agent domestique (3) et au moins un noeud de sous-réseau (2), pour une connexion entre eux par l'intermédiaire d'un réseau (4), le noeud mobile comprenant :
des moyens pour générer une pluralité d'adresses temporaires, adresses CoA, ainsi qu'un nombre correspondant d'indices de paramètres de sécurité ;
des moyens pour envoyer les adresses CoA et les indices de paramètres de sécurité générés, à l'agent domestique ;
des moyens pour recevoir un nombre correspondant d'adresses domestiques, adresses HoA, et d'indices de paramètres de sécurité associés, qui sont générés par et qui sont envoyés à partir de l'agent domestique sur la base des adresses CoA et des indices de paramètres de sécurité reçus ; et
des moyens pour sélectionner une adresse CoA et une adresse HoA appairée en même temps qu'un indice de paramètres de sécurité associé ;
dans lequel le noeud mobile est agencé pour communiquer avec l'agent domestique sur la base de protocoles qui emploient les adresses CoA et les adresses HoA générées ainsi que les indices de paramètres de sécurité associés ; et
le noeud mobile utilise la nouvelle paire d'adresses CoA / HoA non encore utilisées et le nouvel indice de paramètres de sécurité correspondant pour chaque nouvelle session de communication entre le noeud mobile et l'agent domestique.
